# EUROPEAN PATENT APPLICATION

(11) **EP 2 233 432 A1**
(43) Date of publication of application: **29.09.2010**
(21) Application number: 09250816.7
(22) Date of filing: 24.03.2009
(51) Int. Cl.: C01B 3/38, C01B 3/48, C01B 3/50

(54) **Plant for generating electricity and for sequestrating carbon dioxide**

(71) Applicant: Hydrogen Energy International Limited, Weybridge Surrey KT13 ONY (GB)
(72) Inventor: The designation of the inventor has not yet been filed
(74) Representative: Murray, Elisabeth Anne

(57) **Abstract**

Disclosed is a plant for generating carbon dioxide in concentrated form and electricity comprising a decarbonised fuel production unit and an electricity generating unit in which the decarbonised fuel is combusted wherein the decarbonised fuel production unit employs the following process steps::
a) introducing an oxidant feed stream comprising industrial pure oxygen, oxygen-enriched air or normal air, optionally steam and a fuel feed stream comprising methane and optionally hydrogen and/or steam to an autothermal reactor unit (ATR) for the production of synthesis gas wherein (i) the temperature of the fuel feed stream is in the range 350 to 700°C, and (ii) the molar ratio of oxygen contained in the oxidant feed stream to carbon (in hydrocarbons) in the fuel feed stream is from 0.45:1 to 0.85:1;
b) withdrawing a synthesis gas stream comprising methane, hydrogen, carbon monoxide, carbon dioxide, nitrogen and optionally steam from the ATR and heat exchanging the synthesis gas stream with a water stream for the production of steam and subsequently heat exchanging the synthesis gas stream with at least one process stream selected from the group consisting of a hydrocarbon feedstock, a pre-reformer feed stream, the fuel feed stream, decarbonised fuel from step e), boiler feed water, process condensate or part thereof, and steam for the production of superheated steam;
c) if necessary, introducing steam to the synthesis gas stream before passing at least a portion of the synthesis gas stream to a shift converter unit where the synthesis gas reacts with steam to generate additional carbon dioxide and hydrogen;
d) withdrawing a shift converted gas stream from the shift converter unit and heat exchanging the shift converted gas stream with at least one process stream selected from the group consisting of a hydrocarbon feedstock, a pre-reformer feed stream, the fuel feed stream, decarbonised fuel from step e),boiler feed water, process condensate or part thereof, water for the production of steam, and steam for the production of superheated steam;
e) passing the shift converted gas stream to a carbon dioxide separation unit for the separation of a concentrated carbon dioxide stream therefrom thereby generating a decarbonised fuel stream comprising hydrogen and nitrogen;

## Description

The present invention relates to the production of carbon dioxide in concentrated form and electricity from a hydrocarbon feedstock, and, in particular, to a process where the concentrated carbon dioxide is injected into a hydrocarbon bearing formation via an injection well for displacement of the hydrocarbons towards an associated production well.

It is known to produce electricity in a combined cycle power plant integrated with a reforming plant where a gas turbine is fuelled by hydrogen containing gas. Thus, International Patent Application number WO 00/03126 relates to a process for the production of electric energy, steam, and carbon dioxide in concentrated form from a hydrocarbon feedstock, comprising formation of synthesis gas in an air driven autothermal reactor unit (ATR); heat exchanging the formed synthesis gas and thereby producing steam; treating at least a portion of the synthesis gas in a CO-shift reactor unit and carbon dioxide separator unit for formation of concentrated carbon dioxide and a hydrogen containing gas which at least partly is combusted in a combined cycle gas turbine for the production of electric energy; and where air from said turbine unit is supplied to the ATR unit, that the exhaust from the gas turbine is heat exchanged for production of steam which together with steam generated upstream is utilized in a steam turbine for production of substantially CO₂-free electric energy.

WO 2008/074980 describes an alternative process for generating carbon dioxide in concentrated form and electricity from a hydrocarbon feedstock which comprises the steps of:
a) introducing an air feed stream comprising air and optionally steam and a fuel feed stream comprising methane and optionally hydrogen and/or steam to an autothermal reactor unit (ATR) for the production of synthesis gas wherein (i) the temperature of the fuel feed stream is in the range 350 to 700°C, and (ii) the molar ratio of oxygen contained in the air feed stream to carbon (in hydrocarbons) in the fuel feed stream is from 0.45:1 to 0.85:1;
b) withdrawing a synthesis gas stream comprising methane, hydrogen, carbon monoxide, carbon dioxide, nitrogen and optionally steam from the ATR and heat exchanging the synthesis gas stream with a water stream for the production of steam and subsequently heat exchanging the synthesis gas stream with at least one process stream selected from the group consisting of a hydrocarbon feedstock, a pre-reformer feed stream, the fuel feed stream, a decarbonised fuel stream, boiler feed water, the air feed stream, and steam for the production of superheated steam;
c) if necessary, introducing steam to the synthesis gas stream before passing at least a portion of the synthesis gas stream to a shift converter unit where the synthesis gas reacts with steam to generate additional carbon dioxide and hydrogen;
d) withdrawing a shift converted gas stream from the shift converter unit and heat exchanging the shift converted gas stream with at least one process stream selected from the group consisting of a hydrocarbon feedstock, a pre-reformer feed stream, the fuel feed stream, a decarbonised fuel stream, boiler feed water, the air feed stream, water for the production of steam, and steam for the production of superheated steam;
e) passing the shift converted gas stream to a carbon dioxide separation unit for the separation of a concentrated carbon dioxide stream from a decarbonised fuel stream comprising hydrogen and nitrogen;
f) combusting at least part of the decarbonised fuel stream in a gas turbine wherein the gas turbine drives an electric generator thereby producing electricity and wherein combustion of the decarbonised fuel stream generates an exhaust gas.

In the processes of the above-described prior art there is a significant degree of integration between the ATR-based decarbonised fuel production unit of the plant and the combined cycle electricity generating unit. In particular and in accordance with normal chemical engineering practice process schemes have been devised by those skilled in the art which include numerous interconnections between the two units for the purposes of capturing and reutilising waste heat with the objective of increasing thermal efficiency.

However recent evaluations of such schemes have demonstrated that the gain in efficiency resulting from said integration is unexpectedly marginal. There was initially an expectation that close integration of the decarbonised fuel production and power production parts of the facility, particularly the heat exchange arrangements would yield significant energy savings. More detailed study has however disclosed that these benefits although not necessarily totally absent are typically small in overall project economics. On the other hand it has been found that a non-integrated modular approach brings benefits in terms of ease of construction, simplification in operations and maintenance and hardware procurement cost savings.

Consequently the present invention discloses a plant design concept in which the only connection between the decarbonised fuel production and power production units is the fuel gas supply line to the combined cycle gas turbine and optionally a compressed air line back from the electricity generating unit to the ATR. In every other respect the two units are discrete modules separated in process engineering terms.

According to the present invention there is provided a plant for generating carbon dioxide in concentrated form and electricity comprising a decarbonised fuel production unit and an electricity generating unit in which the decarbonised fuel is combusted wherein the decarbonised fuel production unit employs the following process steps:
a) introducing an oxidant feed stream comprising industrial pure oxygen, oxygen-enriched air or normal air, optionally steam and a fuel feed stream comprising methane and optionally hydrogen and/or steam to an autothermal reactor unit (ATR) for the production of synthesis gas wherein (i) the temperature of the fuel feed stream is in the range 350 to 700°C, and (ii) the molar ratio of oxygen contained in the oxidant feed stream to carbon (in hydrocarbons) in the fuel feed stream is from 0.45:1 to 0.85:1;
b) withdrawing a synthesis gas stream comprising methane, hydrogen, carbon monoxide, carbon dioxide, nitrogen and optionally steam from the ATR and heat exchanging the synthesis gas stream with a water stream for the production of steam and subsequently heat exchanging the synthesis gas stream with at least one process stream selected from the group consisting of a hydrocarbon feedstock, a pre-reformer feed stream, the fuel feed stream, decarbonised fuel from step e), boiler feed water, process condensate or part thereof, and steam for the production of superheated steam;
c) if necessary, introducing steam to the synthesis gas stream before passing at least a portion of the synthesis gas stream to a shift converter unit where the synthesis gas reacts with steam to generate additional carbon dioxide and hydrogen;
d) withdrawing a shift converted gas stream from the shift converter unit and heat exchanging the shift converted gas stream with at least one process stream selected from the group consisting of a hydrocarbon feedstock, a pre-reformer feed stream, the fuel feed stream, decarbonised fuel from step e), boiler feed water, process condensate or part thereof, water for the production of steam, and steam for the production of superheated steam;
e) passing the shift converted gas stream to a carbon dioxide separation unit for the separation of a concentrated carbon dioxide stream therefrom thereby generating a decarbonised fuel comprising hydrogen and nitrogen;and wherein in the electricity production unit the following step is carried out
f) producing electricity from hot exhaust gases generated by combusting the decarbonised fuel stream produced in step e) in a gas turbine **characterised in that** decarbonised fuel production unit and electricity production unit are otherwise isolated from each other in process engineering terms.

By the expression 'otherwise isolated from each other in process engineering terms' in step(f) it is meant that there is no integration of process streams between the decarbonised fuel production unit and electricity production unit and no net flow of thermal energy or process streams other than the transferring of the decarbonised fuel generated in step e) above to the combined cycle gas turbine in step f) and optionally the transference of compressed back to the ATR as mentioned above. Otherwise all energy and process material generated in each of the units is either consumed in that unit itself or exported off the plant. Likewise any net energy requirement a unit may have is obtained from independent sources. For example the superheated steam generated in steps (b) and/or (d) may be used within the decarbonised fuel production unit to drive mechanical process equipment such as pumps and/or compressors, to generate power, to heat the fuel feed stream, to provide energy for the carbon dioxide separation unit, to provide energy to dehydrate the concentrated carbon dioxide stream, or the steam may be exported to an external process duty.

Referring to the various process steps set out above, it is envisaged that the fuel feed stream may comprise one or more additional gaseous components selected from the group consisting of heavier hydrocarbons having two or more carbon atoms (hereinafter referred to as C₂₊ hydrocarbons), carbon dioxide, nitrogen, and carbon monoxide. The molar ratio of oxygen contained in the oxidant feed stream to carbon (in hydrocarbon) in the fuel feed stream is from 0.45:1 to 0.85:1, preferably 0.55:1 to 0.7:1. The oxygen to carbon molar ratio refers to oxygen (O₂) contained in the oxidant feed stream and to the carbon in the hydrocarbons of the fuel feed stream (excluding carbon in any carbon dioxide and/or carbon monoxide that is present in the fuel feed stream).

Optionally, the fuel feed stream that is introduced to the ATR contains steam. In such a case the molar ratio of steam to carbon (in hydrocarbons) in the fuel feed stream that is introduced to the ATR is up to 3:1, preferably, up to 2.5:1. Preferably, the molar ratio of steam to carbon (in hydrocarbons) in the fuel feed stream is within the range of 0:1 1 to 3:1, preferably, 0.3:1 to 3:1, in particular 1:1 to 2.5:1. The steam to carbon molar ratio is based on the carbon in the hydrocarbons of the fuel feed stream excluding carbon in any carbon dioxide and/or carbon monoxide that is present in the fuel feed stream. Where steam is present in a process stream, mole% is based on % of total wet molar flow rate of the stream under discussion.

Optionally, the oxidant feed stream also contains steam. Preferably, the amount of steam in the oxidant feed stream is up to 50 mole%, in particular, up to 5 mole%. Where steam is also present in the oxidant feed stream, it is preferred to adjust the amount of steam that is contained in the fuel feed stream so that the molar ratio of steam to carbon (in hydrocarbons) at the inlet to the ATR is within the range of 0.3:1 to 3:1 (based on the total moles of steam in the oxidant feed stream and the fuel feed stream).

Optionally, the fuel feed stream that is introduced to the ATR also contains hydrogen. The presence of hydrogen in the fuel feed stream is advantageous owing to the hydrogen facilitating ignition of the fuel feed stream with the oxygen contained in the oxidant feed stream. Typically, the amount of hydrogen in the fuel feed stream is within the range of 0 to 20 mole%, preferably, 2 to 20 mole%.

It is envisaged that the oxidant feed stream and fuel feed stream will be introduced separately to the ATR. The relative rates at which the oxidant feed stream and fuel feed stream are introduced to the ATR are such that the molar ratio of oxygen (O₂) contained in the oxidant feed stream to carbon (in hydrocarbons) in the fuel feed stream is in the range of 0.45:1 to 0.85:1, preferably 0.55:1 to 0.7:1.

The fuel feed stream is introduced to the ATR at a temperature in the range of 350 to 700°C, preferably 400 to 650°C, in particular, 425 to 620°C. The fuel feed stream is preferably heated to the desired temperature by heat exchange of the fuel feed stream or a precursor of the fuel feed stream (such as a hydrocarbon feedstock and/or a pre-reformer feed stream) against the synthesis gas stream formed in step (b) and/or the shift converted gas stream formed in step (d), and/or against a steam stream. However, where, the fuel feed stream is introduced to the ATR at a temperature above 600°C, it may be preferred to boost the temperature of the fuel feed stream using an external heater. Preferably, the oxidant feed stream is introduced to the ATR at a temperature within the range 200°C to 730°C, typically, at a temperature in the range of 250 to 600°C, in particular 450 to 550°C. Such preheating of the oxidant or part thereof may be achieved by heating the oxidant feed stream to the desired temperature against the synthesis gas stream in step (b) or the shift converted gas stream in step (d) or in an external heater.

Typically, the fuel feed stream is produced by passing a pre-reformer feed stream comprising a hydrocarbon feedstock and steam through a pre-reformer that contains a pre-reforming catalyst to obtain a fuel feed stream comprising methane, hydrogen, carbon monoxide, carbon dioxide and steam. If desired, the hydrogen content of the fuel feed stream may be increased. This may be achieved by multiple step pre-reforming, by using high pre-reformer inlet temperatures, or by recycling hydrogen to the fuel feed stream. For example, part of the decarbonised fuel stream generated in step (e) may be recycled to the hydrocarbon feedstock or the pre-reformer feed stream (upstream of the pre-reformer) or to the pre-reformed stream (downstream of the pre-reformer).

The hydrocarbon feedstock may be selected from the group consisting of natural gas, liquefied petroleum gas (LPG) and various petroleum distillates (for example, naphtha), preferably, natural gas.

Where the hydrocarbon feedstock is a lean natural gas that contains low amounts of C₂₊ hydrocarbons, there is no requirement to pre-reform the lean natural gas. Thus, the lean natural gas may be used directly as the fuel feed stream for the ATR. Optionally, the lean natural gas may be mixed with a portion of the decarbonised fuel stream formed in step (e) thereby generating a fuel feed stream containing hydrogen, preferably, in an amount of from 2 to 20 mole%. Optionally, steam may be added to the fuel feed stream in a molar ratio of steam to carbon (in hydrocarbons) of up to 3:1, preferably, 1:1 to 2.5:1. However, the present invention does not exclude pre-reforming of the lean natural gas.

Where the hydrocarbon feedstock is a natural gas that contains high amounts of C₂₊ hydrocarbons (for example, ethane, propane, and butanes), the natural gas feedstock and steam are preferably introduced to a pre-reformer arranged upstream of the ATR. Suitably, the molar ratio of steam to carbon (in hydrocarbons) in the pre-reformer feed stream at the inlet to the pre-reformer is in the range of 0.5:1 to 2.5:1. An advantage of having a pre-reformer upstream of the ATR is that the pre-reformed stream exiting the pre-reformer has a reduced content of C₂₊ hydrocarbons and an increased content of hydrogen. Where there is a sufficiently high amount of C₂₊ hydrocarbons in the natural gas feedstock, the hydrogen content of the pre-reformed stream may lie within the preferred range of 2 to 20 mole% for the fuel feed stream. However, if the hydrogen content of the pre-reformed stream is less than the preferred range for the fuel feed stream, a portion of the decarbonised fuel stream formed in step (e) may be recycled to the natural gas feedstock and/or the pre-reformed feed stream (upstream of the pre-reformer) and/or to the pre-reformed stream (downstream of the pre-reformer) to generate the fuel feed stream.

Where the hydrocarbon feedstock is a petroleum distillate (for example, naphtha), it is desirable that a pre-reformer feed stream comprising the petroleum distillate and steam is passed through a pre-reformer (arranged ahead of the ATR) where the pre-reforming catalyst converts substantially all of the C₂₊ hydrocarbons in the pre-reformer feed stream into methane, hydrogen, carbon monoxide and carbon dioxide. Suitably, the molar ratio of steam to carbon (in hydrocarbons) in the pre-reformer feed stream at the inlet to the pre-reformer is at least 1.0:1, preferably in the range 1.0:1 to 4.5:1, in particular, 1.0:1 to 3.0:1. It is envisaged that where the hydrocarbon feedstock is a petroleum distillate, the hydrogen content of the pre-reformed stream may lie within the preferred range for the fuel feed stream (2 to 20 mole % hydrogen).However, if the hydrogen content of the pre-reformed stream is less than the preferred range for the fuel feed stream, a portion of the decarbonised fuel stream formed in step (e) may be recycled to the hydrocarbon feedstock and/or the pre-reformer feed stream (upstream of the pre-reformer) and/or to the pre-reformed stream (downstream of the pre-reformer) to generate the fuel feed stream. Accordingly, a pre-reformer containing a pre-reforming catalyst increases the flexibility with regard to the hydrocarbon feedstock.

Preferably, a desulfurisation unit comprising a hydrogenator and a desulfuriser is provided upstream of the ATR and pre-reformer (if present) to remove sulfurcontaining compounds from the hydrocarbon feedstock (natural gas, LPG, or petroleum distillate). Generally, the sulfur containing compounds are converted to hydrogen sulfide by reduction with hydrogen at an elevated temperature over a hydrodesulfurisation catalyst in the hydrogenator. Suitably, the hydrogen feed to the hydrogenator is a minor part of the decarbonised fuel stream formed in step (e). Sufficient hydrogen is fed to the hydrogenator to ensure that substantially all of the organosulfur compounds contained in the hydrocarbon feedstock are converted into hydrogen sulfide over the hydrodesulfurisation catalyst. The hydrogen sulfide is then removed from the hydrocarbon feedstock in the desulfuriser by an absorbent, typically, zinc oxide. Where at least a portion of the hydrogen content of the fuel feed stream is derived from the decarbonised fuel stream formed in step (e), the amount of hydrogen that is recycled to the hydrogenator is preferably sufficiently high for the fuel feed stream to contain the preferred amount of hydrogen of 2 to 20 mole%. However, it is also envisaged that part of the decarbonised fuel stream produced in step (e) may be recycled to the desulfurised hydrocarbon feedstock downstream of the desulfurisation unit to ensure that the fuel feed stream contains the preferred amount of hydrogen. Where a pre-reformer is present, it is preferred to recycle part of the decarbonised fuel stream produced in step (e) to the pre-reformed stream (downstream of the pre-reformer). Thus, a portion of the decarbonised fuel stream formed in step (e) may be recycled both upstream and downstream of the desulfurisation unit.

Generally, the hydrocarbon feedstock (natural gas, LPG, or petroleum distillate) that is introduced to the desulfuisation unit is heated to a temperature in the range 180 to 420°C, for example, 230°C by heat exchange with the synthesis gas stream formed in step (b) and/or with the shift converted gas stream formed in step (d) and/or with steam. The hydrocarbon feedstock may be passed to the hydrogenator of the desulfurisation unit without any further heating provided that a low temperature hydrodesulfurisation catalyst, for example, a nickel molybdenum oxide hydrodesulfurisation catalyst is employed in the hydrogenator.

Where a pre-reformer containing a pre-reforming catalyst is arranged upstream of the ATR and the hydrocarbon feedstock is natural gas, the pre-reforming reaction is endothermic and results in a typical temperature drop of 30 to 100°C across the pre-reformer, the temperature drop being dependent on the pre-reformer inlet temperature. It is therefore preferred that the pre-reformer feed stream (mixture of desulfurised natural gas feedstock and steam) that is passed into the pre-reformer is heated to a temperature in the range 400 to 650°C, more preferably 500 to 600°C so that the fuel feed stream that exits the pre-reformer is within the preferred temperature range of 400 to 570°C. Typically, both the preheating of the natural gas feedstock prior to desulfurisation and the preheating of the pre-reformer feed stream (mixture of desulfurised natural gas feedstock and steam) that is passed into the pre-reformer is achieved by heat exchange with the synthesis gas stream formed in step (b) and/or with the shift converted gas stream formed in step (d) and/or with steam. As discussed above, where the pre-reformer feed stream is to be heated to a temperature in excess of 600°C, it may be convenient to employ an external heater, at least for the final stage of preheating. However, the present invention does not exclude boosting the temperature of the pre-reformer feed stream by heat exchange with the gas turbine exhaust.

Where a pre-reformer containing a pre-reforming catalyst is arranged upstream of the ATR and the hydrocarbon feedstock is a gaseous petroleum distillate, for example, naphtha, the pre-reforming reaction may become exothermic resulting in a temperature increase of typically 40 to 60°C across the pre-reformer. This temperature increase aids heating of the fuel feed stream to the desired temperature of 350 to 700°C.

The autothermal reactor (ATR) is a reactor driven by oxygen, enriched or normal air. By pure oxygen is meant a stream containing typically in excess of 90 mol% O₂. By enriched air is meant a stream containing between 90 mol % and 21 mol % O₂, the balance mainly comprising nitrogen, and typically containing between 60 mol % and 30 mol % O₂.

Suitably a pure oxygen feed stream to the ATR may be provided by evaporation of said oxygen at high pressure within a conventional air separation plant or by compression of gaseous oxygen provided at lower pressure from an air separation plant.

Suitably, an enriched air feed stream to the ATR may be produced optionally (1) by admixture of high pressure pure oxygen provided as described above with air compressed in a stand alone compressor; however, it may be advantageous to extract process air for the ATR at the discharge of the air compressor of the gas turbine and to boost the pressure of the air discharge stream to the required ATR injection pressure; or(2) by admixture of low pressure oxygen with air and compressing the mixture so formed to the pressure required for introduction into the ATR: or (3) by distillation of air to generate a gas stream with the desired O₂ content and either evaporating it at sufficient pressure to feed the ATR or compressing it to that pressure. As discussed above, optionally, steam may be added to the oxidant in an amount of up to 50, mole %, in particular, up to 51 mole%. The reactions in the autothermal reformer result in a significant temperature rise across the autothermal reformer. Typically, the synthesis gas stream that exits the ATR, at reforming equilibrium, is at a temperature in the range 800 to 1200°C, for example, approximately 900°C and may be cooled by heat exchange with water. Preferably, the synthesis gas is cooled by heat exchange with a high pressure water stream in a waste heat boiler thereby generating high pressure (HP) steam. The synthesis gas stream is preferably further cooled against the desulfurised hydrocarbon feedstock in a pre-reformer feed heater. Finally, the remaining heat energy of the synthesis gas stream is preferably used to generate additional HP steam in a heat exchanger, typically a waste heat boiler. Thus, there may be two waste heat boilers associated with the ATR. Preferably, the HP steam is at a pressure in the range of 35 to 200 barg, preferably 50 to 150 barg. Typically, the HP steam is saturated HP steam at a temperature in the range of 450 to 600°C.

The steam that is fed to the pre-reformer may be a steam exhaust stream from the steam turbine. Preferably, the steam is introduced to the desulfurised hydrocarbon feedstock upstream of the pre-reformer.

At least part of the cooled synthesis gas from step (b) is treated in a shift converter unit where the carbon monoxide is converted to carbon dioxide over a shift catalyst according to the water gas shift reaction (WGSR)

CO +H₂O → CO₂ + H₂.

Suitably, an excess of steam, preferably, medium pressure (MP) steam, is added to the desulfurised hydrocarbon feedstock upstream of the pre-reformer so that sufficient steam is available for the water gas shift reaction. Alternatively, steam (preferably, MP steam) may be introduced into the cooled synthesis gas stream from step (b) prior to introducing the synthesis gas stream to the shift converter unit.

The shift converter unit may be a single shift reactor containing a shift catalyst. However, it is preferred that the shift converter unit comprises a high temperature shift reactor containing a high temperature shift catalyst and a low temperature shift reactor containing a low temperature shift catalyst.

The water gas shift reaction is exothermic and results in a significant temperature rise across the shift converter unit. Accordingly, the shift converter unit may be cooled by continuously removing a portion of the shift converted gas stream and cooling this stream by heat exchange with one or more process streams. Where the shift converter unit comprises a high temperature shift reactor and a low temperature shift reactor, the process gas exiting the high temperature shift reactor is generally cooled in two steps. In the first cooling step, the heat of the high temperature shift reaction may be used to generate HP steam, for example, in a high temperature shift waste heat boiler by heat exchange with a boiler feed water. In the second cooling step, the cooled gas exiting the waste heat boiler may be further cooled against a process stream selected from the group consisting of the hydrocarbon feedstock, a pre-reformer feed stream, the fuel feed stream, a decarbonised fuel stream, boiler feed water, the air feed stream, and steam (for the generation of superheated steam) before entering the low temperature shift converter. The shift converted gas stream that exits the low temperature shift reactor is preferably cooled by heat exchange with at least one process stream selected from the hydrocarbon feedstock, a pre-reformer feed stream, the fuel feed stream, the decarbonised fuel stream, the air feed stream, and boiler feed water.

The shift converted gas stream comprises primarily hydrogen, nitrogen, carbon dioxide and steam. Generally, the shift converted gas stream also contains minor amounts of carbon monoxide and methane. Owing to the presence of steam, an aqueous phase (condensate) condenses out of the cooled shift converted gas stream which must be separated from the shift converted gas stream. Typically, the condensate is separated from the cooled shift converted gas stream in a condensate drum. The shift converted gas stream may then be further cooled against at least one process stream selected from the hydrocarbon feedstock, the pre-reformer feed stream, the fuel feed stream, the air feed stream, and the decarbonised fuel stream such that further condensate condenses out of the shift converted gas stream and is removed in a further condensate drum. The separated condensate may be passed to a stripper column or a saturator system for removal of volatile impurities, in particular, ammonia, hydrogen cyanide and carbon dioxide. Where the separated condensate is passed to a stripper column, steam is typically introduced at an intermediate position in the stripper column, a vapour stream (comprising steam and volatile impurities) is withdrawn overhead from the stripper column and a condensate stream is removed from the bottom of the stripper column. Suitably, the vapour stream is used as steam for the pre-reformer (if present) or the ATR. The advantage of doing so is that the volatile impurities are returned to the ATR and the shift converter unit. Accordingly, the concentrations of ammonia, methanol and hydrogen cyanide are at least partly re-equilibrated in the ATR and in the shift converter unit, thereby preventing an accumulation of these contaminants. Typically, the steam that is introduced to the stripper column is MP steam.

After removal of condensate, the shift converted gas stream is passed to a CO₂ removal unit for formation of a concentrated carbon dioxide stream and a decarbonised fuel. Suitable CO₂ removal units include units that employ a membrane to separate the decarbonised fuel stream from the concentrated carbon dioxide stream or units comprising a CO₂ absorber and CO₂ desorber that employ physical or chemical absorption solvents.

The concentrated carbon dioxide stream preferably comprises at least 98% CO₂ on a dry basis, the remainder being mostly hydrogen. Typically, the hydrogen gas stream may comprise trace amount of carbon oxides (CO and CO₂) and methane, for example, less than 500 ppm on a molar basis.

Preferably, the concentrated CO₂ stream is dehydrated to reduce its water content such that the dehydrated CO₂ stream has a dew point of approximately -10°C at the transportation pressure of the concentrated CO₂ stream thereby ensuring that liquid (water) will not condense out of the concentrated CO₂ stream. Typically, the concentrated CO₂ stream is dehydrated at a pressure of 20 to 60 barg. Suitably, the water content of the concentrated CO₂ stream is reduced in a suction knock out drum. The concentrated CO₂ stream is then compressed and the compressed CO₂ stream is passed through at least one dehydration bed (formed from, for example, a molecular sieve or a silica gel) or through a glycol dehydration unit (for example, a triethylene glycol dehydration unit) to reduce the water content still further.

Preferably, the dehydrated concentrated CO₂ stream is compressed and delivered to a pipeline for transfer to a reception facility of an oil or gas field where the concentrated CO₂ stream is used as an injection gas in the oil or gas field. The concentrated CO₂ stream is further compressed to above the pressure of the hydrocarbon-bearing formation of the oil or gas field before being injected into the hydrocarbon-bearing formation. The injected CO₂ displaces the hydrocarbons towards an associated production well for enhanced recovery of hydrocarbons therefrom. If any carbon dioxide is produced from the production well together with the hydrocarbons, the carbon dioxide may be separated from the hydrocarbons for re-injection into the hydrocarbon-bearing formation. It is also envisaged that the carbon dioxide may be injected into other subterranean formations (for example, a depleted hydrocarbon-bearing subterranean formation or an aquifer) or into a cavern for storage therein. It is envisaged that the carbon dioxide may be stored indefinitely in the subterranean formation or cavern.

The hydrogen content of the decarbonised fuel stream leaving the CO₂ removal step as described above will range from over 90 mol%, when pure oxygen is used as the oxidant in the ATR, to typically 70 - 80 mol % when enriched air is used as the oxidant (the balance of circa 20 -30 mol% in that case being mainly nitrogen), to 45-55% when normal air is used as the oxidant.

Additional nitrogen, derived typically from the air separation plant which supplies oxygen to the ATR may then be added to the to achieve a nitrogen content typically in excess of 40% in order to limit the NOₓ content of the exhaust from the gas turbine, particularly but not exclusively when oxygen or enriched air are used as the oxidant.

Addition of nitrogen to limit NOₓ formation in the gas turbine content. This is advantageous as it allows for the elimination of water or steam as an additional diluent for the decarbonised fuel stream. However, the present invention does not exclude the presence of water in the decarbonised fuel stream. Suitably, the level of NOₓ in the exhaust gas is less than 60 ppm, preferably, less than 25 ppm. Preferably, the decarbonised fuel stream contains 35 to 65% by volume hydrogen, more preferably, 45 to 60% by volume hydrogen, for example, 48 to 52% by volume of hydrogen. It is envisaged that this decarbonised fuel stream may also contain impurities and trace amounts of carbon oxides (CO and CO₂) and of methane.

As mentioned above the decarbonised fuel stream is fed to an electricity production unit comprising one or more gas turbine generators and ancillary equipment to recover heat from the exhaust gases (principally steam). The types of gas turbines used in this step are well known in the art and comprise a combustion chamber wherein the hydrogen is burnt and a turbine which is spun by the hot exhaust gases thereby driving the armature of an electrical generator. Heat remaining in the exhaust gases after driving the turbine can be further recovered and used to drive further turbines or used to pre-heat the incoming decarbonised fuel stream or the gases in the combustion zone. In the plant of the present invention all such residual heat is used with the electricity production unit.

Suitably the hot exhaust gas is recovered in a series of heater exchangers generating progressively high, medium and low pressure steam. Typically the high pressure steam is used to further heat the hot exhaust gases prior to driving the turbine whilst the medium and low pressure steams pre-heat the decarbonised fuel stream before combustion.

In an embodiment of the present invention a supply of compressed air is taken from an air extraction point on the gas turbine and is recycled to the ATR reactor in the decarbonised fuel production unit for use as part or all of the feed stream.

The invention will be further described with reference to Figures 1, 2 and 3. Figure 1 shows the use of oxygen as the oxidant, Figure 2 shows the use of enriched air as the oxidant and Figure 3 shows the use of normal air as the oxidant.

Throughout the following description, examples of temperatures and pressures are given at various stages of a process carried out in accordance with the present invention. However, it should be recognized that these temperatures and pressures are only illustrative of the anticipated conditions within the plant and actual values may vary for any particular process without departing from the present invention.

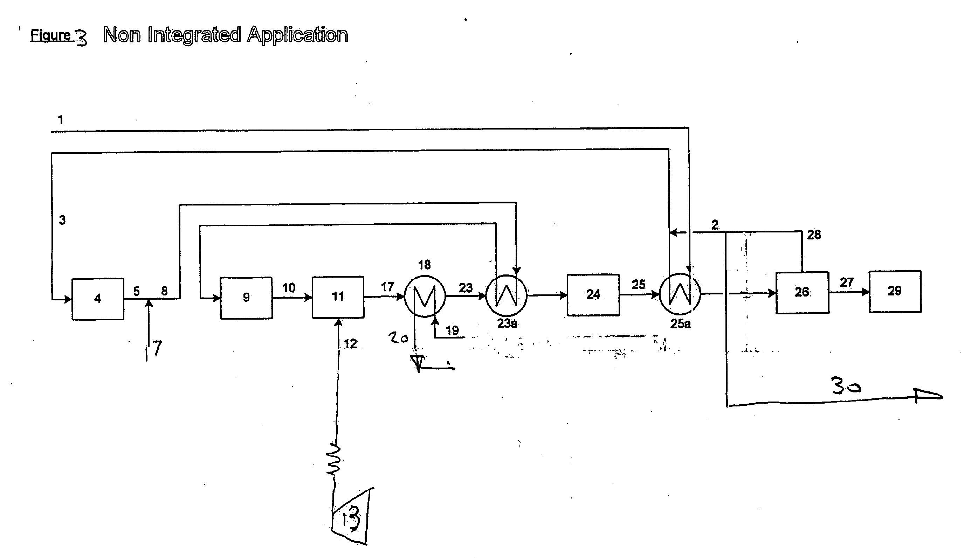

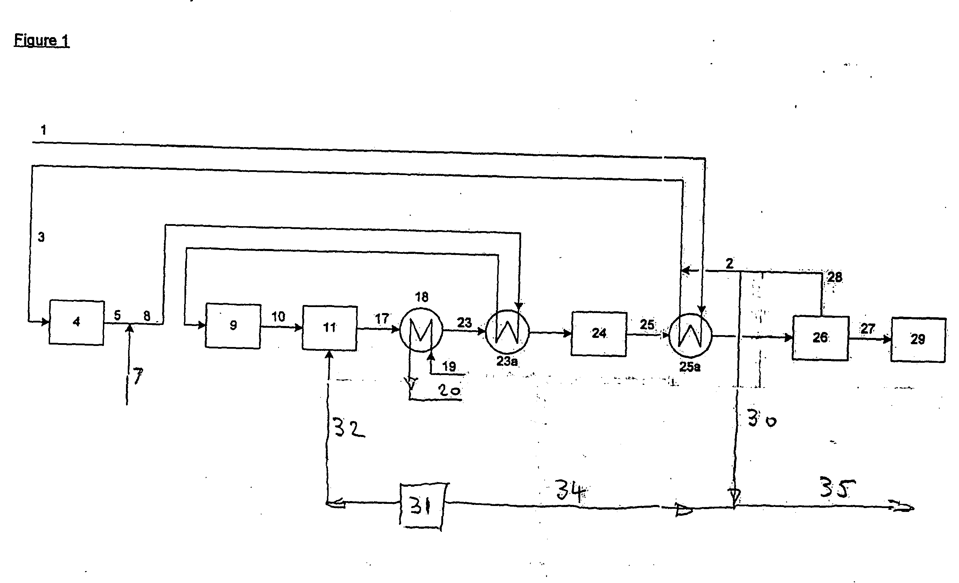

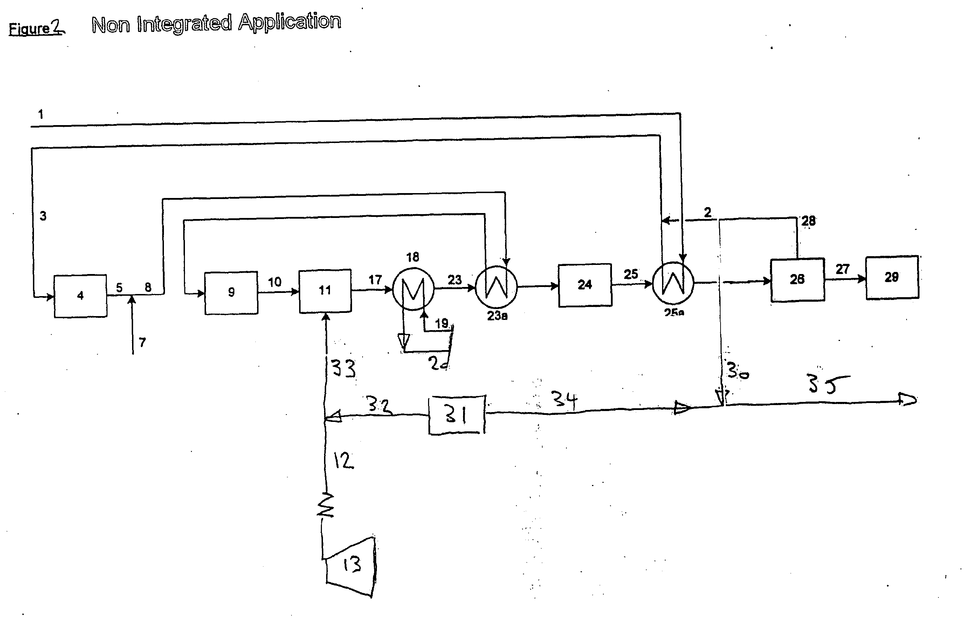

A pressurized natural gas feedstock 1 is heated to 380°C by heat exchange against a shift converted gas stream (described below) and optionally against a superheated medium pressure (MP) steam stream (described below but not shown). A decarbonised fuel stream 2 (described below) is added to the pressurized natural gas feedstock 1 and the resulting mixed stream 3 is preheated before being passed to a desulfurisation unit 4 comprising a hydrogenator (not shown) and a desulfuriser (not shown). In the hydrogenator, any organosulfur compounds (mercaptans) are converted to hydrogen sulfide by reduction with hydrogen over a hydrodesulfurisation catalyst. The hydrogen sulfide is then removed from the natural gas feedstock in the desulfuriser by absorption on a zinc oxide absorbent. A desulfurised natural gas feedstock 5 is withdrawn from the desulfurisation unit 4. Steam is introduced into the desulfurised natural gas feedstock 5 thereby generating a pre-reformer feed stream 8. The steam is taken as a medium pressure (MP) bleed from a steam turbine 6 and is introduced into the desulfurised hydrocarbon stream 5 via line 7. The pre-reformer feed stream 8 is introduced to a pre-reformer 9 at a temperature of at least 560°C where at least a portion of the methane and of any C₂₊ hydrocarbons contained in the natural gas feed are converted into hydrogen and carbon monoxide by reaction with steam over a pre-reforming catalyst. A pre-reformed (partially reformed) stream 10 exits the pre-reformer 9 at a temperature of 530°C and acts as a fuel feed stream for an autothermal reformer (ATR) 11. In the case of an oxygen-driven ATR process (Figure 1), an air separation unit 31 feeds oxygen stream 32 to the ATR 11 to initiate the reforming of the fuel feed stream to synthesis gas (a mixture of essentially hydrogen, carbon monoxide, carbon dioxide and steam). In the case of an enriched air-driven ATR process (Figure 2), a heated compressed air stream 12 (optionally comprising up to 10 mole% steam, in particular, up to 1 mole % steam) is admixed with oxygen stream 32 to form enriched air stream 33 which is fed to the ATR 11 In the case of a normal air-driven ATR process (Figure 3), the air feed arrangement is as described above for Figure 2.

The feed rates of the fuel feed stream and the oxidant feed stream are controlled such that the molar ratio of oxygen (O₂) contained in the oxidant feed stream to carbon (in hydrocarbons) in the fuel feed stream is about 0.65:1. A synthesis gas stream 17 exits the ATR 11 and is cooled in a waste heat boiler (steam generator) 18 by heat exchange with a boiler feed water stream 19. HP steam is withdrawn from the waste heat boiler 18 at a temperature of 315°C and may be used for driving compressors or pumps or for driving an electrical generator or sent for export.

A cooled synthesis gas stream 23 exits the waste heat boiler and the remaining thermal energy in the cooled synthesis gas stream is used to preheat the pre-reformer feed stream 8, preferably, in heat exchanger 23a and to generate further HP steam (not shown). The cooled synthesis gas stream is then fed to a shift converter unit 24 comprising a high temperature shift reactor (not shown) and a low temperature shift reactor (not shown) where carbon monoxide is reacted with water to give carbon dioxide and hydrogen over a water gas shift catalyst. A partially shift converted gas stream exits the high temperature shift reactor and the thermal energy in the partially shift converted gas stream is used to generate more HP steam in a waste heat boiler (not shown) and to pre-heat boiler feed water (not shown). The cooled partially shift converted gas stream is then passed to the low temperature shift reactor. A shift converted gas stream 25 comprising hydrogen, steam, nitrogen and carbon dioxide is withdrawn from the low temperature shift reactor. The thermal energy associated with the shift converted gas stream is used to heat the natural gas feedstock 1 in heat exchanger 25a, the decarbonised fuel stream that is fed to the gas turbine and optionally boiler feed water. The cooled shift converted gas stream is passed to a first condensate drum (not shown) where condensate separates from the shift converted gas stream. Preferably, the shift converted gas stream is further cooled against one or more process streams such that further condensate condenses out of the shift converted gas stream, for example, the shift converted gas stream may be cooled against the reboiler duty of a CO₂ absorber-desorber unit. The cooled shift converted gas stream containing entrained condensate is then passed to a second condensate drum (not shown) where condensate separates from the shift converted gas stream. Condensate collected in the drums is fed to a condensate stripper where the condensate is stripped of volatile impurities (such as ammonia, hydrogen cyanide, methanol and carbon dioxide) with medium pressure (MP) steam. The vapour from the top of the stripper (comprising steam, and the volatile impurities) is introduced into the pre-reformer feed stream (not shown) to provide steam for the pre-reformer and also for the shift converter. A condensate stream having a reduced content of volatile impurities is withdrawn from the bottom of the condensate stripper and is passed to a condensate polishing unit (not shown) for removal of any remaining impurities, for example, formic acid. The condensate polishing unit provides demineralised water to the process of the present invention.

The shift converted gas stream that is withdrawn from the top of the second condensate drum is then passed to a CO₂ removal unit 26 for example, a CO₂ absorber and desorber, which separates the stream into a concentrated carbon dioxide stream 27 and a decarbonised fuel stream 28.

The concentrated carbon dioxide stream 27 from the CO₂ removal unit 26 is then fed to a carbon dioxide compression and drying unit 29. The resulting pressurized and dehydrated concentrated carbon dioxide stream may be introduced to a pipeline that delivers the CO₂ to an injection well for enhanced recovery of hydrocarbons from a hydrocarbon-bearing formation via an associated production well (not shown) or long-term underground storage.

The decarbonised fuel stream 28 from the CO₂ removal unit 26 is divided into three streams. A first decarbonised fuel stream 2 is added to pressurized natural gas feedstock (as described above). With oxygen as the oxidant stream 28 contains little or no nitrogen, and with enriched air as the oxidant stream 28 contains typically 25-30% nitrogen, a second dry decarbonised fuel stream 30 from the CO₂ removal unit 26 is then first mixed with nitrogen stream 34 produced in air separation unit 31 to form stream 35, which then is typically burned in a gas turbine. The purpose of this dilution with nitrogen is limitation of NOₓ emission from said gas turbine. With air as the oxidant stream 30 typically contains 45-55% nitrogen, which is sufficient for is limitation of NOₓ emission in many applications without addition of further nitrogen.

## Claims

1. A plant for generating carbon dioxide in concentrated form and electricity comprising a decarbonised fuel production unit and an electricity generating unit in which the decarbonised fuel is combusted wherein the decarbonised fuel production unit employs the following process steps:
a) introducing an oxidant feed stream comprising industrial pure oxygen, oxygen-enriched air or normal air, optionally steam and a fuel feed stream comprising methane and optionally hydrogen and/or steam to an autothermal reactor unit (ATR) for the production of synthesis gas wherein (i) the temperature of the fuel feed stream is in the range 350 to 700°C, and (ii) the molar ratio of oxygen contained in the oxidant feed stream to carbon (in hydrocarbons) in the fuel feed stream is from 0.45:1 to 0.85:1;
b) withdrawing a synthesis gas stream comprising methane, hydrogen, carbon monoxide, carbon dioxide, nitrogen and optionally steam from the ATR and heat exchanging the synthesis gas stream with a water stream for the production of steam and subsequently heat exchanging the synthesis gas stream with at least one process stream selected from the group consisting of a hydrocarbon feedstock, a pre-reformer feed stream, the fuel feed stream, decarbonised fuel from step e)boiler feed water, process condensate or part thereof, and steam for the production of superheated steam;
c) if necessary, introducing steam to the synthesis gas stream before passing at least a portion of the synthesis gas stream to a shift converter unit where the synthesis gas reacts with steam to generate additional carbon dioxide and hydrogen;
d) withdrawing a shift converted gas stream from the shift converter unit and heat exchanging the shift converted gas stream with at least one process stream selected from the group consisting of a hydrocarbon feedstock, a pre-reformer feed stream, the fuel feed stream, decarbonised fuel from step e) boiler feed water, process condensate or part thereof, water for the production of steam, and steam for the production of superheated steam;
e) passing the shift converted gas stream to a carbon dioxide separation unit for the separation of a concentrated carbon dioxide stream therefrom thereby generating a decarbonised fuel stream comprising hydrogen and nitrogen and wherein in the electricity production unit the following step is carried out f) producing electricity from hot exhaust gases generated by combusting the decarbonised fuel stream produced in step e) in a combined cycle gas turbine **characterised in that** decarbonised fuel production unit and electricity production unit are otherwise isolated from each other in process engineering terms.

2. A plant as claimed in claim 1 wherein the fuel feed stream comprises hydrogen in an amount within the range of 2 to 20 mole%.

3. A plant as claimed in any one of the preceding claims wherein the fuel feed steam comprises steam and the molar ratio of steam to carbon (in hydrocarbons) in the fuel feed stream is up to 3:1, preferably, within the range of 1:1 to 2.5:1.

4. A plant as claimed in any one of the preceding claims wherein the fuel feed stream is produced by passing a preheated pre-reformer feed stream comprising a mixture of (i) a hydrocarbon feedstock selected from the group consisting of natural gas, liquefied petroleum gas (LPG) and petroleum distillates and (ii) steam through a pre-reformer to obtain a fuel feed stream comprising methane, hydrogen, steam and additionally carbon monoxide and carbon dioxide and wherein the pre-reformer feed stream is at least partly preheated by heat exchange with the synthesis gas stream produced in step (b) and/or the shift converted gas stream produced in step (d).

5. A plant as claimed in any one of the preceding claims wherein a preheated hydrocarbon feedstock is passed through a hydrodesulphurisation unit arranged upstream of the ATR and pre-reformer thereby forming a desulfurised hydrocarbon feedstock and wherein the hydrocarbon feedstock is preheated by heat exchange with the synthesis gas stream produced in step (b) and/or with the shift converted gas stream produced in step (d) and/or with steam.

6. A plant as claimed in any one of the preceding claims wherein an aqueous phase condenses out of the shift converted gas stream in step (d) and the aqueous phase is removed from the shift converted gas stream before passing the shift converted gas stream to the carbon dioxide separation unit in step (e).

7. A plant as claimed in any one of the preceding claims wherein the oxidant feed stream or part thereof is preheated to a temperature in the range 200 to 730°C by heat exchange with the synthesis gas stream in step (b) and/or with the shift converted gas stream in step (d).

8. A plant as claimed in any one of the preceding claims wherein the decarbonised fuel stream comprises 35 to 65% by volume hydrogen, preferably 46 to 60% by volume hydrogen, in particular, 48 to 52% by volume hydrogen.

9. A plant as claimed in any of the preceding claims where compressed air is recycled from an air extraction point on the gas turbine to the oxidant feed stream to the ATR.
